# EUROPEAN PATENT SPECIFICATION

(11) **EP 1 298 351 B1**
(45) Date of publication and mention of the grant of the patent: **22.02.2006**
(21) Application number: 02020483.0
(22) Date of filing: 12.09.2002
(51) Int. Cl.: F16H 39/20

(54) **Integral filter for hydrostatic transmission**
Integrierter Filter für ein hydrostatisches Getriebe
Filtre intégral pour transmission hydrostatique

(30) Priority: 28.09.2001 US 965990
(43) Date of publication of application: 02.04.2003
(73) Proprietor: Eaton Corporation, Cleveland, Ohio 44114-2584 (US)
(72) Inventor: Carlson, Jerry L., Spencer, Iowa 51301 (US); Casey, James Michael, Spencer, Iowa 51301 (US)
(74) Representative: Schwan - Schwan - Schorer

(56) References cited:
- DE-A- 2 332 584
- US-A- 3 127 341
- US-A- 4 686 829
- US-A- 4 905 472
- US-A- 5 136 845

## Description

### BACKGROUND OF THE DISCLOSURE

The present invention relates to hydrostatic transmissions, and more particularly, to such transmissions of the closed-loop type.

Although the present invention may be utilized with hydrostatic transmissions in which the pump and motor elements may be of various types, the invention is even more advantageous when used in a hydrostatic transmission in which the pump and motor are both of the radial piston (or ball) type. Therefore, the invention will be described in connection with an embodiment in which the pump and motor are both of the radial ball type. More specifically, the present invention will be described in connection with an embodiment in which the pump and motor are associated with a journal and pintle arrangement, which is an especially advantageous embodiment, for reasons which will become apparent subsequently.

A typical hydrostatic transmission of the radial ball type includes a pintle assembly having journal portions on which the radial ball pump and motor elements are rotatably mounted. The pintle assembly includes a radially extending disc-like portion disposed axially between the pump and motor, although it will be understood by those skilled in the art that the present invention is not so limited. Typically, the journal portions of the pintle assembly define the fluid conduits interconnecting the pump and motor elements, while the disc-like portion of the pintle assembly typically defines a portion of the flow path of the hydrostatic transmission which is upstream of the inlet of the pump element.

A hydrostatic transmission of the type for which the present invention is especially suited is produced by the assignee of the present invention and sold commercially under the designation "Model 7" and such a transmission is illustrated and described in greater detail in U.S. Patent Nos. 4,091,717 and 5,136,845.

Although such hydrostatic transmissions have been extremely successful commercially, they have not typically been capable of achieving the type of "life" (i.e., in terms of hours of operation) which is now being considered desirable, and in some cases, even essential by customers for such transmissions. It is believed that one cause contributing to this less than desirable life capability has been the lack of any sort of fluid filter as part of the hydrostatic transmission. An obvious solution would be to apply an external filter, for example, attached to the housing of the hydrostatic transmission, at or near an inlet port.

However, the use of an external filter assembly on hydrostatic transmissions of this type has been considered unacceptable for several reasons. First, adding an external filter assembly would normally require the addition of some sort of recirculation pump ("charge pump"), adding substantial cost to the transmission. Second, there are typically fairly severe limitations regarding the space surrounding the hydrostatic transmission, such that adding an external filter assembly of the conventional "can" type would require a major redesign of either the hydrostatic transmission or the space surrounding the transmission, which is typically unacceptable to the vehicle manufacturer. Third, the cost of the conventional can-type filter assembly has been considered unacceptable, in terms of the effect on the total cost of the hydrostatic transmission.

### BRIEF SUMMARY OF THE INVENTION

Accordingly, it is an object of the present invention to provide an improved hydrostatic transmission which is able to include a filter assembly which overcomes the disadvantages of the known, conventional, external filter assemblies on hydrostatic transmissions.

It is another object of the present invention to provide such an improved hydrostatic transmission including a filter assembly having a large enough filter area to effectively provide a "lifetime" filter capability, without the need to change the filter during the normal operating life of the hydrostatic transmission.

The above and other objects of the invention are accomplished by the provision of an improved hydrostatic transmission as it is defined in claim 1, the pre-characterizing portion of which reflects a hydrostatic transmission as it is disclosed in US-A-4 905 472.

### BRIEF DESCRIPTION OF THE DRAWINGS

FIG. 1 is an axial cross-section of a "Prior Art" hydrostatic transmission of the type with which the present invention may be utilized.

FIG. 2 is a hydraulic schematic of the hydrostatic transmission shown in FIG. 1, but which also illustrates the schematic location of the filter assembly made in accordance with the present invention.

FIG. 3 is an axial cross-section of the pintle assembly of a hydrostatic transmission made in accordance with the present invention, taken on generally the same plane as in FIG. 1, but on a slightly larger scale.

FIG. 3A is an axial cross-section through a piece of the filter material prior to it being inserted in the pintle assembly, illustrating one aspect of the invention, the view being taken on line 3A-3A of FIG. 4.

FIG. 4 is a plan view of the pintle assembly viewed from the left in FIG. 3, but on a substantially smaller scale than FIG. 3.

FIG. 5 is a transverse cross-section, taken on line 5-5 of FIG. 3, and on the same scale as FIG. 4.

### DETAILED DESCRIPTION OF THE PREFERRED EMBODIMENT

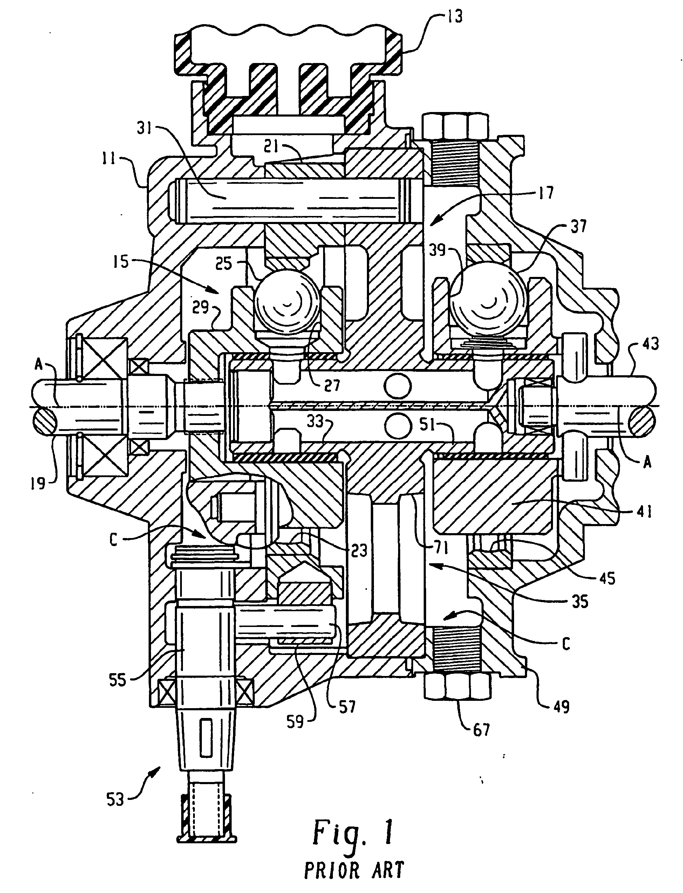

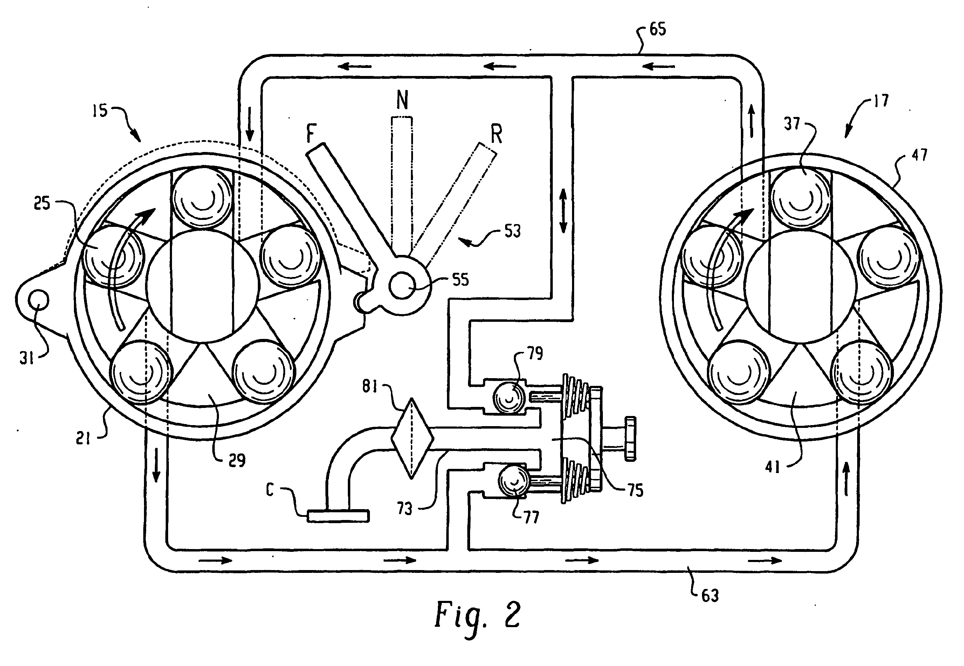

Referring now to the drawings, which are not intended to limit the invention, FIG. 1 illustrates a "Prior Art" hydrostatic transmission of the general type with which the present invention may be utilized, but does not illustrate or include the present invention. Instead, the present invention will be described in connection with the description of FIGS. 2-5. Some hydrostatic transmissions of the type shown in FIG. 1 include an integral charge pump, but in the subject embodiment of the invention, there is no charge pump, partly for ease of illustration and explanation. However, it should be understood by those skilled in the art that the present invention is not so limited, and could be utilized in a hydrostatic transmission of the type including a charge pump.

The hydrostatic transmission of FIG. 1 includes a housing 11, which comprises several different sections, and on top of the housing 11 is disposed a reservoir 13, shown only fragmentarily in FIG. 1. The reservoir 13 is, in the subject embodiment, primarily an expansion tank, and is not part of the main flow path through the transmission, such that there is no substantial flow into or out of the reservoir 13. Disposed within the housing 11 is a variable displacement radial ball pump 15 and a fixed displacement radial ball motor 17. A prime mover (not shown) is connected to an input shaft 19 to provide a rotary input to the radial ball pump 15. The pump 15 includes a moveable (pivotable) cam ring assembly 21 having a circular, concave race 23 which mates with a plurality of pump balls 25 which are located in bores 27 of an annular pump rotor 29. The cam ring 21 is able to pivot about the axis of a cam pivot pin 31 to vary the eccentricity of the race 23 relative to an axis of rotation A of the transmission.

Rotation of the pump rotor 29 about a journal portion 33 of a pintle assembly 35 moves the balls 25 radially outwardly and inwardly in the bores 27, causing fluid to be forced by the balls 25 through passages (to be described subsequently) defined by the journal portion 33 to one side of a plurality of motor balls 37. The motor balls 37 are located within bores 39, defined by an annular motor rotor 41.

The motor rotor 41 is connected to an output shaft 43 which is axially aligned with the input shaft 19, in the subject embodiment, although it should be clear that the present invention is not so limited. For example, the invention would be equally adaptable to a transmission in which the input shaft and output shaft are oriented at a right angle to each other. The motor balls 37 move radially outwardly under the pressure of the fluid from the pump 15, remaining in contact with a circular concave race 45. The concave race 45 is rigidly secured to a body portion 49 of the housing 11 and has the race 45 mounted eccentrically relative to the axis of rotation A. The motor rotor 41 rotates around a journal portion 51 of the pintle assembly 35, as a result of the movement of the motor balls 37 into and out of the bores 39. Appropriate seals, bearings, and bushings are provided throughout the transmission to prevent fluid from escaping from the housing 11, and to allow for rotation of the various components, in a manner well known to those skilled in the art, and which forms no part of the present invention and therefore, will not be described further herein.

An appropriate control arrangement 53 including a control shaft 55, a control pin 57, and a cam ring insert 59 is provided to pivot the cam ring 21 about the pivot pin 31. Such pivotal movement is accomplished by rotating the control shaft 55 about its axis, which turns the control pin 57 and accordingly moves the cam ring insert 59 and cam ring 21, all of which is in commercial use and is well known to those skilled in the art.

Referring now to FIG. 2, in conjunction with FIG. 1, it may be seen that movement of the cam ring 21 by means of the control arrangement 53 allows the pump 15 to vary from full displacement in one direction ("F" for forward, shown in solid lines) to zero displacement ("N" for neutral) to full displacement in the other direction ("R", for reverse, shown in dashed lines).

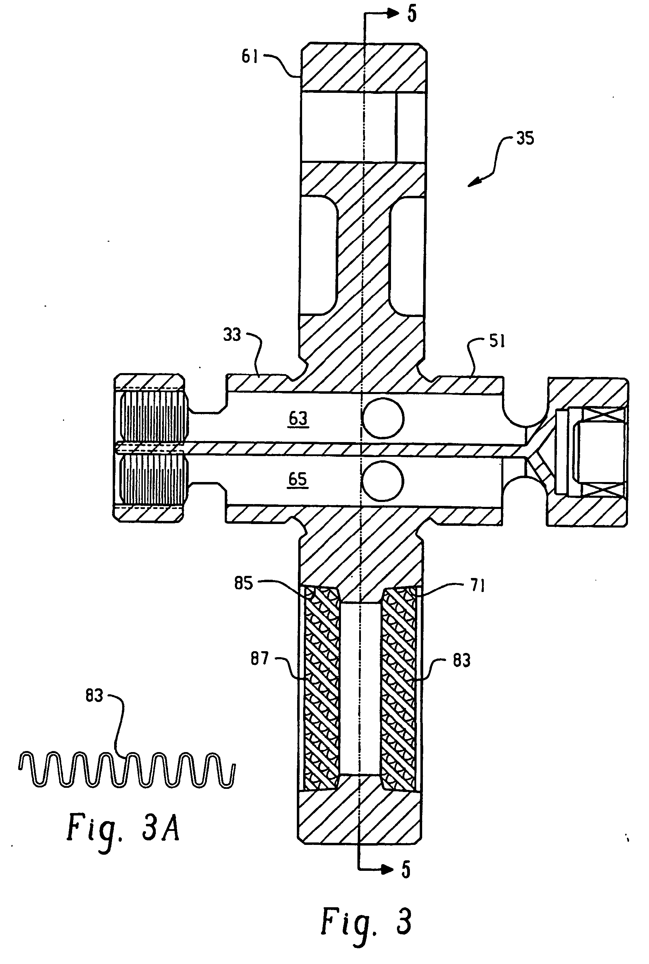

Referring now primarily to FIG. 3, but in conjunction with FIGS. 1 and 2, the pintle assembly 35 will be described in greater detail. As was mentioned previously, the pintle assembly 35 includes the axially oppositely disposed journal portions 33 and 51, and disposed therebetween is a radially extending, disc-like portion 61. In the subject embodiment, and by way of example only, the disc-like portion 61 and the journal portions 33 and 51 comprise a single, integral cast iron member which defines a pair of fluid passages 63 and 65. As may best be seen in FIG. 2, the fluid passages 63 and 65 comprise the high pressure and low pressure conduits in the closed-loop hydrostatic transmission circuit, interconnecting the pump 15 and the motor 17. With the flow being in the direction shown by the arrows in FIG. 2, the fluid passage 63 serves as both the pump "outlet" and the motor "inlet", while the fluid passage 65 serves as both the motor "outlet" and the pump "inlet".

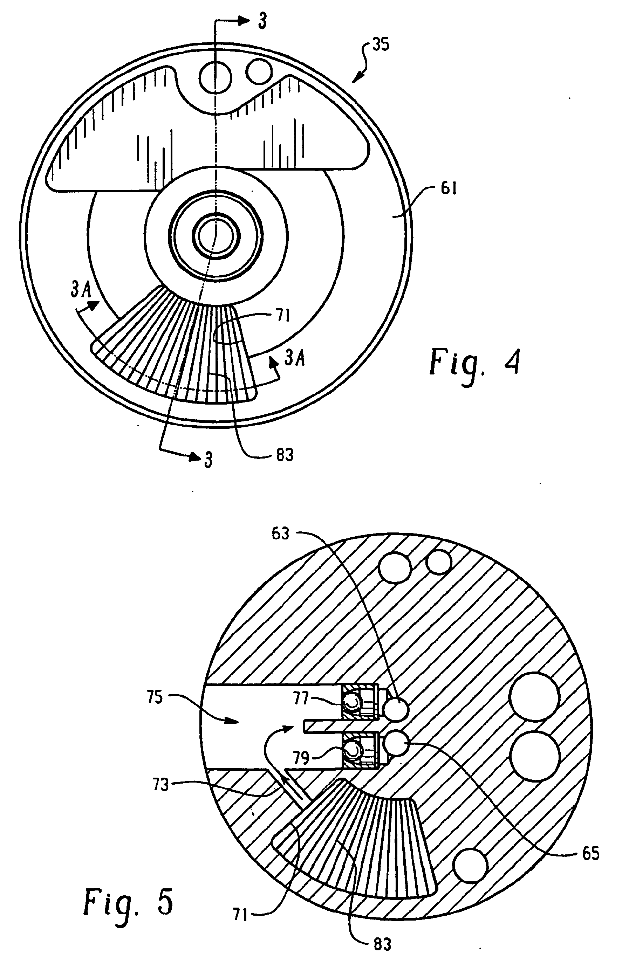

Referring now primarily to FIGS. 1 and 2, it may be seen that the housing 11 includes an interior sump or case drain region C, represented schematically in FIG. 2 by the symbol for a reservoir. When the hydrostatic transmission is operating, hydraulic fluid is drawn from the sump C into the main flow path of the transmission, but only to the extent necessary to compensate for any leakage out of the flow path, for example, between the bores and the balls. Otherwise, the pump 15, the motor 17 and the fluid passages 63 and 65 constitute a closed loop. In the "Prior Art" pump shown in FIG. 1, fluid drawn from the sump C would then enter into a cast-in recessed area 71. Referring now also to FIG. 5, it may be seen that the recessed area 71 is in open fluid communication through an angled passage 73 with a fluid chamber 75 (see also FIG. 2), the chamber 75 being closed off at its periphery by an inside diameter of the housing 11 as may best be seen in FIG. 1. In a manner well known to those skilled in the art, low pressure fluid drawn into the hydrostatic loop and flowing through the recessed area 71 then enters the fluid chamber 75, and from there flows past either a check valve 77 or a check valve 79 to whichever of the fluid passages 63 or 65 is at lower fluid pressure.

As is illustrated schematically in FIG. 2, it is desirable to have a filter assembly, generally designated 81 disposed somewhere between the sump C and the fluid chamber 75, just upstream of the check valves 77 and 79. In accordance with the present invention, the filter assembly 81 comprises the recessed area 71 having disposed therein a piece of filter material 83 which, as may best be seen in FIG. 3A preferably comprises a piece of pleated paper filter material of the type commonly used in filter assemblies for hydraulic applications. In other words, the present invention does not involve anything unique in regard to the filter material itself. Instead, in accordance with the present invention, the recessed area 71 is utilized, preferably in its "as cast" condition and the piece of filter material 83 is simply glued in place as shown in FIGS. 4 and 5, in such a manner as to create a seal all around the outer periphery of the piece of filter material 83, the seal being between the material 83 and the adjacent metal surface of the recessed area 71. An advantage of the seal around the piece of filter material 83 is that there is practically no chance for leakage of dirty oil, bypassing the filter.

The filter material 83 may be "glued" in place utilizing any of the commercially available adhesives which are suitable for adhering paper to the particular metal being utilized, and which are not soluble in the particular hydraulic fluid being utilized in the hydrostatic transmission. An example of such an adhesive would be a material such as a Polyurethane Oligomer Mixture, sold commercially by Dymax Corporation under the trade name Multi-Cure 626-VT.

In accordance with an important aspect of the invention, the piece of filter material 83 is adhered directly to the as-cast recessed area 71 to avoid the cost of the typical can-type filter assembly, i.e., the type in which the filter material is disposed within a cylindrical, metal container which is then threaded onto a fitting external to the hydrostatic transmission housing. With the present invention, the only "added" material, in order to provide a filter assembly, is simply the piece of filter material 83 and the required adhesive, without the need for even some sort of metal frame being disposed about the filter material.

In accordance with another important aspect of the invention, and as may be seen in FIGS. 4 and 5, the cross-sectional flow area of the filter assembly of the invention can be quite large, relative to the flow area of the various passages which comprise the flow path within the hydrostatic transmission. This is important because it is then feasible for the filter assembly of the invention to have a "lifetime" filter capability, such that the filter does not typically need to be changed during the normal operating life of the hydrostatic transmission. Thus, the present invention provides a large, lifetime filter capability without adding to the overall size of the hydrostatic transmission housing, and without requiring any substantial redesign of the transmission or of its housing.

In the subject embodiment of the present invention, the piece of filter material 83 is disposed within the recessed area 71 defined by the disc-like portion 61 of the pintle assembly 35, partly because the portion 61 provides a large, available location for a large flow filter, and partly because the portion 61 is already part of the flow path from the sump C to the inlet of the pump 15. However, it will be understood by those skilled in the art that the present invention is not so limited, and the recessed area 71 which receives the filter material 83 could be located elsewhere within the transmission housing. In connection with this particular point, it will be understood that, for purposes of the present invention, the term "housing" means and includes practically any part of the transmission which is not rotating while the transmission is operating.

Referring again primarily to FIG. 3, one of the reasons for the present invention being especially advantageous when used in a radial ball device of the journal and pintle type will now be described. The configuration of the disc-like portion 61 is such that there is a second recessed area 85, and disposed within the area 85 is a second piece of filter material 87, glued in place as described previously. The area 85 is substantially identical to the recessed area 71, and the filter material 87 is substantially identical to the filter material 83. Thus, the arrangement is such that the area axially between the recessed areas 71 and 85 is in open communication with the angled passage 73, and fluid in the sump C is drawn through both of the pieces of filter material 83 and 87, thus doubling the effective filter area, still without adding to the overall size or cost of any of the transmission components.

The invention has been described in great detail in the foregoing specification, and it is believed that various alterations and modifications of the invention will become apparent to those skilled in the art from a reading and understanding of the specification. It is intended that all such alterations and modifications are included in the invention, insofar as they come within the scope of the appended claims.

## Claims

1. A hydrostatic transmission comprising a housing assembly (11), a variable displacement fluid pump (15) and a fluid pressure operated motor (17) disposed in said housing assembly (11); said fluid pump (15) including a pump inlet (65) and a pump outlet (63), and said fluid motor (17) including a motor inlet (63) and a motor outlet (65), and said housing assembly (11) being in fluid communication with a source (C) of low pressure fluid, said hydrostatic transmission defining a flow path including, in order, said source (C), said pump inlet (65), said pump outlet (63), said motor inlet (63), and said motor outlet (65); said hydrostatic transmission further including a filter assembly disposed in series flow relationship in said flow path; wherein
(a) said housing assembly (11) defines a recessed area (71) intersecting said flow path at a location between said source (C) of low pressure fluid and said pump inlet (65), the flow area of said recessed area (71) being substantially greater than the flow area of said flow path;
(b) said filter assembly comprises a piece (83) of filter material disposed within said recessed area (71) and attached directly thereto in a manner sufficient to maintain said piece (83) of filter material within said recessed area (71) during flow through said flow path;
**characterized by** said housing assembly (11) including a radially-extending disc-like portion (61) disposed axially between said fluid pump (15) and said fluid motor (17); said disc-like portion (61) defining said recessed area (71) and defining a fluid passage (73,75) disposed downstream of said recessed area (71) and in fluid communication with said pump inlet (65).

2. A hydrostatic transmission as claimed in claim 1, **characterized by** said fluid pump comprising a radial piston pump (15) and said fluid pressure operated motor comprising a radial piston motor (17).

3. A hydrostatic transmission as claimed in claim 2, **characterized by** said housing assembly (11) comprises a pintle assembly (35) including a radially-extending disc-like portion (61) disposed axially between said radial piston pump (15) and said radial piston motor (17).

4. A hydrostatic transmission as claimed in claim 3, **characterized by** said radially-extending disc-like portion (61) of said pintle assembly (35) defining said recessed area (71).

5. A hydrostatic transmission as claimed in claim 1, **characterized by** said piece of filter material comprises a single piece of pleated filter paper (83), said piece of filter paper being attached within said recessed area (71) by means of an adhesive material being in contact with both said piece of filter paper (83) and said recessed area (71) of said housing assembly (11).

6. A hydrostatic transmission as claimed in claim 1, **characterized by** a check valve (77) disposed in said fluid passage (73,75) and operable to permit flow through said filter assembly, then through said fluid passage and said check valve (77), and into said pump inlet (65).

7. A hydrostatic transmission as claimed in claim 1, **characterized by** radially-extending disc-like portion (61) defining first (71) and second (85) recessed areas, and said filter assembly comprising first (83) and second (87) pieces of filter material disposed in said first (71) and second (85) recessed areas, respectively.

## Patentansprüche

1. Hydrostatisches Getriebe mit einer Gehäuseanordnung (11), einer Fluidpumpe mit variabler Verdrängung (15) sowie einem fluiddruckbetätigten Motor (17), die in der Gehäuseanordnung (11) angeordnet sind; wobei die Fluidpumpe (15) einen Pumpeneinlass (65) und einen Pumpenauslass (63) aufweist, und wobei der Fluidmotor (17) einen Motoreinlass (63) und einen Motorauslass (65) aufweist, wobei die Gehäuseanordnung (11) in Fluidverbindung mit einer Quelle (C) für Niederdruckfluid steht, wobei das hydrostatische Getriebe einen Fluidweg bestimmt, der, in dieser Reihenfolge, die Quelle (C), den Pumpeneinlass (65), den Pumpenauslass (63), den Motoreinlass (63) und den Motorauslass (65) umfasst; wobei das hydrostatische Getriebe ferner eine in dem Fluidweg strömungsmäßig in Reihe angeordnete Filteranordnung aufweist; wobei
(a) die Gehäuseanordnung (11) einen ausgenommenen Bereich (71) umfasst, welcher den Strömungsweg an einer Stelle zwischen der Quelle (C) von Niederdruckfluid und dem Pumpeneinlass (65) schneidet, wobei der Strömungsquerschnitt des ausgenommenen Bereichs (71) wesentlich größer als der Strömungsquerschnitt des Fluidwegs ist;
(b) wobei die Filteranordnung ein Teil (83) aus Filtermaterial aufweist, welches innerhalb des ausgenommenen Bereichs (71) angeordnet ist und direkt an diesem hinreichend befestigt ist, um das Teil (83) aus Filtermaterial während einem Strom durch den Strömungsweg innerhalb des ausgenommenen Bereichs (71) zu halten:
**dadurch gekennzeichnet, dass** die Gehäuseanordnung (11) einen radial verlaufenden scheibenförmigen Bereich (61) aufweist, der axial zwischen der Fluidpumpe (15) und dem Fluidmotor (17) angeordnet ist; wobei der scheibenförmige Bereich (61) den ausgenommenen Bereich (71) bestimmt und einen Fluidweg (73, 75) bestimmt, der stromab von dem ausgenommenen Bereich (71) angeordnet ist und in Fluidverbindung mit dem Pumpeneinlass (65) steht.

2. Hydrostatisches Getriebe gemäß Anspruch 1, **dadurch gekennzeichnet, dass** die Fluidpumpe eine Radialkolbenpumpe (15) ist und der fluiddruckbetätigte Motor ein Radialkolbenmotor (17) ist.

3. Hydrostatisches Getriebe gemäß Anspruch 2, **dadurch gekennzeichnet, dass** die Gehäuseanordnung (11) eine Zapfenbaugruppe (35) aufweist, die einen sich radial erstreckenden, scheibenförmigen Bereich (61) umfasst, der axial zwischen der Radialkolbenpumpe (15) und dem Radialkolbenmotor (17) angeordnet ist.

4. Hydrostatisches Getriebe gemäß Anspruch 3, **dadurch gekennzeichnet, dass** der sich radial erstreckende, scheibenförmige Bereich (61) der Zapfenbaugruppe (35) den ausgenommenen Bereich (71) bestimmt.

5. Hydrostatisches Getriebe gemäß Anspruch 1, **dadurch gekennzeichnet, dass** das Teil aus Filtermaterial ein einzelnes Stück gefaltetes Filterpapier (83) aufweist, welches innerhalb des ausgenommenen Bereichs (71) mittels eines Klebstoffes befestigt ist, der in Kontakt sowohl mit dem Stück Filterpapier (83) als auch dem ausgenommenen Bereich (71) der Gehäuseanordnung (11) steht.

6. Hydrostatisches Getriebe gemäß Anspruch 1, **gekennzeichnet durch** ein Rückschlagventil (77), welches in dem Fluiddurchlass (73, 75) angeordnet ist und betätigbar ist, um einen Fluidstrom **durch** die Filteranordnung, dann **durch** den Fluiddurchlass und das Rückschlagventil (77) und in den Pumpeneinlass (65) zuzulassen.

7. Hydrostatisches Getriebe gemäß Anspruch 1, **dadurch gekennzeichnet, dass** der sich radial erstreckende scheibenförmige Bereich (61) einen ersten (71) und einen zweiten (85) ausgenommenen Bereich aufweist, und wobei die Filteranordnung ein erstes (83) und ein zweites (87) Stück Filtermaterial aufweist, welches in dem ersten (71) bzw. zweiten (85) ausgenommenen Bereich angeordnet ist.

## Revendications

1. Transmission hydrostatique comprenant un ensemble de logements (11), une pompe à fluide à déplacement variable (15) et un moteur actionné par la pression fluidique (17) disposé dans ledit ensemble de logements (11) ; ladite pompe à fluide (15) incluant un orifice d'entrée de pompe (65) et un orifice de sortie de pompe (63), ledit moteur fluidique (17) incluant un orifice d'entrée de moteur (63) et un orifice de sortie de moteur (65), et ledit ensemble de logements (11) étant en communication fluidique avec une source (C) de fluide basse pression, ladite transmission hydrostatique définissant un chemin d'écoulement incluant, dans l'ordre, ladite source (C), ledit orifice d'entrée de pompe (65), ledit orifice de sortie de pompe (63), ledit orifice d'entrée de moteur (63) et ledit orifice de sortie de moteur (65) ; ladite transmission hydrostatique incluant, en outre, un ensemble de filtre disposé en relation d'écoulement en série dans ledit chemin d'écoulement ; dans laquelle
(a) ledit ensemble de logements (11) définit une zone évidée (71) intersectant ledit chemin d'écoulement à un emplacement entre ladite source (C) du fluide à basse pression et ledit orifice d'entrée de pompe (65), la surface d'écoulement de ladite zone évidée (71) étant sensiblement plus grande que la surface d'écoulement dudit chemin d'écoulement ;
(b) ledit ensemble de filtre comprend une pièce (83) d'un matériau de filtre disposée à l'intérieur de ladite zone évidée (71) et fixée directement à celle-ci d'une manière suffisante pour maintenir ladite pièce (83) du matériau de filtre à l'intérieur de la zone évidée (71) pendant l'écoulement à travers ledit chemin d'écoulement ;
**caractérisé par** ledit ensemble de logements (11) incluant une partie en forme de disque (61) s'étendant radialement disposée axialement entre ladite pompe de fluide (15) et ledit moteur de fluide (17) ; ladite partie en forme de disque (61) définissant ladite zone évidée (71) et définissant un passage fluidique (73, 75) disposé en aval de ladite zone évidée (71) et en communication fluidique avec ledit orifice d'entrée de pompe (65).

2. Transmission hydrostatique selon la revendication 1, **caractérisée par** ladite pompe de fluide comprenant une pompe à piston radial (15) et ledit moteur actionné par la pression fluidique comprenant un moteur à piston radial (17).

3. Transmission hydrostatique selon la revendication 2, **caractérisée par** ledit ensemble de logements (11) qui comprend un ensemble téton (35) incluant une partie en forme de disque (61) s'étendant radialement disposée axialement entre ladite pompe à piston radial (15) et ledit moteur à piston radial (17).

4. Transmission hydrostatique selon la revendication 3, **caractérisée par** ladite partie en forme de disque (61) s'étendant radialement dudit ensemble téton (35) définissant ladite zone évidée (71).

5. Transmission hydrostatique selon la revendication 1, **caractérisée par** ladite pièce du matériau de filtre qui comprend une seule pièce de papier de filtre ondulé (83), ladite pièce du papier de filtre étant fixée à l'intérieur de ladite zone évidée (71) au moyen d'un matériau d'adhésif qui est en contact avec à la fois ladite pièce de papier de filtre (83) et ladite zone évidée (71) dudit ensemble de logements (11).

6. Transmission hydrostatique selon la revendication 1, **caractérisée par** une soupape de non-retour (77) disposée dans ledit passage fluidique (73, 75) et opérable pour permettre l'écoulement à travers ledit ensemble de filtre, ensuite à travers ledit passage fluidique et ladite soupape de non-retour (77) et dans ledit orifice d'entrée de pompe (65).

7. Transmission hydrostatique selon la revendication 1, **caractérisée par** la partie en forme de disque (61) s'étendant radialement définissant des première (71) et seconde (85) zones évidées, et ledit ensemble de filtre comprend des premières (83) et seconde (87) pièces du matériau de filtre disposées dans lesdites première (71) et seconde (85) zones évidées, respectivement.
